(19) Europäisches Patentamt
European Patent Office
Office européen des brevets

(11) **EP 0 818 871 B1**

(12) **EUROPÄISCHE PATENTSCHRIFT**

(45) Veröffentlichungstag und Bekanntmachung des Hinweises auf die Patenterteilung:
**16.10.2002 Patentblatt 2002/42**

(51) Int Cl.⁷: **H02K 7/06**, F16K 31/04

(21) Anmeldenummer: **97201668.7**

(22) Anmeldetag: **03.06.1997**

(54) **Vorrichtung zum linearen Verstellen eines Stellgliedes**

Apparatus for linearly transposing an actuator

Appareil pour transposition lineaire d'un verin

(84) Benannte Vertragsstaaten:
**DE ES FR GB IT SE**

(30) Priorität: **10.07.1996 DE 19627743**

(43) Veröffentlichungstag der Anmeldung:
**14.01.1998 Patentblatt 1998/03**

(73) Patentinhaber:
• **Philips Corporate Intellectual Property GmbH
20099 Hamburg (DE)**
Benannte Vertragsstaaten:
**DE**
• **Koninklijke Philips Electronics N.V.
5621 BA Eindhoven (NL)**
Benannte Vertragsstaaten:
**ES FR GB IT SE**

(72) Erfinder: **Gerling, Dieter, Dr.-Ing.
Röntgenstrasse 24, 22335 Hamburg (DE)**

(74) Vertreter: **von Laue, Hanns-Ulrich, Dipl.-Ing.
Philips Corporate Intellectual Property GmbH,
Habsburgerallee 11
52064 Aachen (DE)**

(56) Entgegenhaltungen:
**EP-A- 0 287 299          DE-A- 4 008 002
DE-A- 4 300 512          US-A- 4 825 904**

**Beschreibung**

Die Erfindung betrifft eine Vorrichtung zum linearen Verstellen eines Stellgliedes, insbesondere eines Ventilstößels in einer Gas- oder Flüssigkeitsleitung, wobei die Vorrichtung einen Rotor mit einem Innengewinde aufweist, dessen Drehbewegung in eine Linearbewegung einer gegen Verdrehen gesicherten und in das Innengewinde eingreifbaren Gewindespindel umsetzbar ist.

Eine derartige Vorrichtung ist aus der DE 44 23 313 A1 bekannt. Bei dieser bekannten Vorrichtung wird zum linearen Verstellen des Stellgliedes ein zweisträngiger Klauenpolschrittmotor eingesetzt. Bei einem derartigen Klauenpolschrittmotor ist die Anzahl der Schritte pro Umdrehung durch die Geometrie begrenzt. Sowohl die Statorklauen als auch die magnetischen Rotorpole benötigen gewisse Mindestabmessungen. Um eine hohe Auflösung der Linearbewegung bzw. eine hohe Verstellgenauigkeit des Stellgliedes zu erzielen, ist es z.B. möglich, einen Motor mit großer Umfangslänge, d.h. mit großem Durchmesser zu verwenden. Ein derartiger Motor weist aber große Motorabmessungen, große Massenträgheitsmomente und damit verhältnismäßig schlechte dynamische Eigenschaften auf. Bei der bekannten Vorrichtung wird eine hohe Auflösung der Linearbewegung dadurch erreicht, daß die Gewindespindel ein Gewinde mit einer relativ flachen Steigung aufweist. Vielfach ist es erforderlich, daß das Stellglied bei auftretenden Störungen, z.B. bei Stromausfall, selbsttätig in seine Ausgangslage zurückbewegt wird. Bei der bekannten Vorrichtung mit der relativ flachen Gewindesteigung der Gewindespindel ist hierfür eine sehr große Rückstellkraft erforderlich, die dadurch realisiert wird, daß die Gewindespindel einen Elektromagneten aufweist, der bei Bestromung mit einem Ankerglied und mit einer Stange zusammenwirkt und die Stange gegen die Kraft einer Feder in die Gewindespindel hineindrückt. Eine derartige Konstruktion ist sehr aufwendig und teuer.

Es ist Aufgabe der Erfindung, eine Vorrichtung der eingangs genannten Art zu schaffen, die einfach und kostengünstig ist und mittels derer eine hohe Auflösung der Linearbewegung des Stellgliedes realisierbar ist.

Diese Aufgabe ist erfindungsgemäß dadurch gelöst, daß der Rotor einen magnetisierten Drehkörper aufweist, der mit einem einsträngigen, elektrisch erregbarem Stator zusammenwirkt, wobei die Winkelstellung des Rotors mittels des Statorstromes einstellbar ist und wobei der maximale Drehwinkelbereich des Rotors kleiner als 180° ist.

Als magnetisierter Drehkörper wird ein drehbares Teil verstanden, daß dauermagnetisch oder elektrisch magnetisierbar ist.

Bei einer derartigen Vorrichtung ist lediglich eine Statorspule erforderlich, wodurch der Aufwand an Leistungselektronik und die Anzahl der Anschlußklemmen gegenüber einem Klauenpolschrittmotor deutlich reduziert ist. Die Winkelstellung des Rotors und damit die Linearbewegung der Gewindespindel läßt sich mittels des Motorstromes kontinuierlich einstellen. Daher ist die erzielbare Auflösung der Linearbewegung des Stellgliedes nicht wie bei einem Klauenpolschrittmotor auf diskrete Schritte begrenzt. Da mit einer derartigen Vorrichtung ein Drehmoment erzeugt wird, das im wesentlichen hinsichtlich der Winkelstellung des Rotors sinusförmig verläuft, ist der maximale Drehwinkelbereich des Rotors auf Werte unterhalb von 180° begrenzt.

Eine vorteilhafte Ausgestaltung der Erfindung ist dadurch gekennzeichnet, daß Sensormittel vorgesehen sind, die in Abhängigkeit der Winkelstellung des Rotors oder der Linearposition der Gewindespindel (5) Sensorsignale erzeugen und daß Regelmittel vorgesehen sind, die in Abhängigkeit der Sensorsignale die Winkelstellung des Rotors regeln.

Die Sensormittel detektieren die jeweilige Winkelstellung des Rotors und erzeugen in Abhängigkeit der Winkelstellung des Rotors Sensorsignale. Diese Sensorsignale werden den Regelmitteln zugeführt, welche die Winkelstellung des Rotors in Abhängigkeit der Sensorsignale regeln. Mit einer derartigen Vorrichtung läßt sich die jeweilige Winkelstellung des Rotors sehr genau einstellen. Bei geeigneter Auswahl der Sensormittel und der Regelmittel lassen sich dabei Genauigkeiten von weniger als 0,1 Winkelgraden realisieren.

Ein weitere vorteilhafte Ausgestaltung der Erfindung ist dadurch gekennzeichnet, daß Meßmittel vorgesehen sind, mittels derer der Strom und die Spannung des Stators meßbar ist, daß die Meßmittel in Abhängigkeit der Winkelstellung des Rotors Meßsignale erzeugen und daß Regelmittel vorgesehen sind, die in Abhängigkeit der Meßsignale die Winkelstellung des Rotors regeln.

Bei dieser Ausgestaltung sind keine Sensoren erforderlich. Aus den Meßwerten des Stromes und der Spannung des Stators wird auf die Winkelstellung des Rotors geschlossen und eine entsprechende Regelung durchgeführt.

Eine weitere vorteilhafte Ausgestaltung der Erfindung ist dadurch gekennzeichnet, daß das Innengewinde des Rotors und das Gewinde der Gewindespindel als Steilgewinde mit einem Steigungswinkel von wenigstens 30° ausgebildet ist. Der Steigungswinkel α ist dabei definiert als

$$\alpha = \arctan\left(\frac{h}{2\pi r}\right)$$

Hierbei bezeichnet h die Steigung des Gewindes (linearer Vorschub pro Umdrehung) und r den Radius des Gewindes. Mit der erfindungsgemäßen Vorrichtung können sehr hohe Drehmomente des Rotors realisiert werden. Dadurch wird es möglich, die Gewindespindel mit einem Steilgewinde zu versehen, welches bei einer definierten Gegenkraft ein höheres Antriebsmoment erfordert als ein Flachgewinde. Durch dieses steilere Gewinde erhöht sich zwar das benötigte Motordrehmoment, andererseits hat es aber den Vorteil, daß sich die Rückstellkraft, die erforderlich ist, um die Gewindespindel bei Ausfall der Statorerregung in ihre Ausgangsposition zurückzubewegen, verkleinert.

Mit einem solchen Steilgewinde läßt sich trotz des auf Werte von unterhalb 180° begrenzten Drehwinkels des Rotors ein verhältnismäßig großer linearer Verstellweg der Gewindespindel erzielen.

Eine weitere vorteilhafte Ausgestaltung der Erfindung ist dadurch gekennzeichnet, daß Kalibriermittel vorgesehen sind. mittels derer bei einer Referenzposition des Stellgliedes der Zusammenhang zwischen der Winkelstellung des Rotors und der linearen Position des Stellgliedes kalibriert wird.

Der Zusammenhang zwischen der Winkelstellung des Rotors und der linearen Position des Stellgliedes kann sich während des Betriebes der Vorrichtung infolge verschiedenster Umgebungseinflüsse, insbesondere Temperaturschwankungen, ändern. Erhöht sich z.B. die Temperatur, der die Gewindespindel und das Stellglied ausgesetzt sind, so dehnt sich die Gewindespindel aus, und der Zusammenhang zwischen der Winkelstellung des Rotors und der linearen Position des Stellgliedes ändert sich. Durch eine entsprechende Kalibrierung bei einer Referenzposition kann der Zusammenhang zwischen der Winkelstellung des Rotors und der linearen Position des Stellgliedes dann wieder aktualisiert werden.

Bei einer vorteilhaften Ausgestaltung der Erfindung ist vorgesehen, daß das Stellglied ein Ventilstößel eines Ventils ist und die Referenzposition der Schließstellung des Ventils entspricht.

Ventilstößel, insbesondere in Gas- oder Flüssigkeitsleitungen, sind oft sehr hohen Temperaturen ausgesetzt. Diese hohen Temperaturen bewirken eine Ausdehnung der Gewindespindel und verändern somit den Zusammenhang zwischen der Winkelstellung des Rotors und der linearen Position des Ventilstößels. Die Schließstellung des Ventils kann vorteilhaft als Referenzposition benutzt werden. Befindet sich der Ventilstößel in der Schließstellung, so ist seine lineare Position eindeutig bestimmt, und der Zusammenhang zwischen der Winkelstellung des Rotors und dieser Schließstellung des Ventilstößels kann jedesmal, wenn sich der Ventilstößel in der Schließstellung befindet, aktualisiert werden.

Eine weitere vorteilhafte Ausgestaltung der Erfindung ist dadurch gekennzeichnet, daß der Spalt zwischen Stator und magnetisiertem Rotor derart ungleichmäßig ausgebildet ist, daß der Rotor bei unerregtem Stator eine Vorzugswinkelstellung einnimmt.

Für viele Anwendungsfälle ist es erforderlich, daß das Stellglied bei Abschalten oder Ausfall des Statorstromes eine vorgebbare Position einnimmt. Dies kann vorteilhaft durch eine ungleichmäßige Ausgestaltung des Spaltes zwischen Stator und magnetisiertem Rotor realisiert werden. Bei stromloser Statorspule nimmt der Rotor dann die Vorzugswinkelstellung ein, die der Winkelstellung des geringsten magnetischen Widerstandes für den Rotor entspricht. Eine derartige ungleichmäßige Ausgestaltung des Luftspaltes ist einfach und kostengünstig zu realisieren. Es sind weder aufwendige mechanische Rückstellmittel, z.B. Rückstellfedern, noch sonstige zusätzliche elektromagnetische Rückstellanordnungen erforderlich. Die magnetischen Rückstellkräfte aufgrund des ungleichmäßig ausgebildeten Luftspaltes können insbesondere dann vorteilhaft verwendet werden, wenn das Gewinde der Gewindespindel, wie bereits oben beschrieben, als Steilgewinde ausgeführt ist. Durch dieses steilere Gewinde erhöht sich zwar das benötigte Drehmoment, das von der Vorrichtung zur Linearbewegung der Spindel bei einer bestimmten Gegenkraft aufgebracht werden muß. andererseits verringert sich aber die Rückstellkraft, die erforderlich ist, um den Rotor bei unerregtem Stator in die Vorzugswinkelstellung zu bewegen. Infolge dieser verhältnismäßig geringen Rückstellkraft kann diese sehr einfach durch ungleichmäßige Ausgestaltung des Luftspaltes zwischen Stator und magnetisiertem Rotor realisiert werden. Ferner ist es bei einer derartigen Ausgestaltung der Erfindung möglich, daß die Vorzugswinkelstellung nicht gleich der Anfangs- oder Endwinkelstellung ist. Somit ist auch die Vorzugslinearposition des Stellgliedes, die das Stellglied bei der Vorzugswinkelstellung des Rotors einnimmt, nicht unbedingt gleich der Anfangs- oder Endposition des linearen Stellweges des Stellgliedes. Ist das Stellglied z.B. ein Ventilstößel, so kann bei Stromausfall dafür gesorgt werden, daß das Ventil nicht ganz schließt bzw. ganz öffnet, sondern daß das Ventil eine bestimmte Mittelposition einnimmt, die einen Notbetrieb gewährleistet.

In weiterer vorteilhafter Ausgestaltung der Erfindung ist wenigstens ein Hilfsmagnet vorgesehen, der den Rotor bei unerregtem Stator in die Vorzugswinkelstellung bewegt.

Auch mittels dieses Hilfsmagneten, der vorteilhaft in Nuten des Stators eingebettet ist, kann dafür gesorgt werden, daß bei unerregtem Stator der Rotor eine Vorzugswinkelstellung und damit das Stellglied eine Vorzugslinearposition einnimmt. Das erforderliche Rückstellmoment läßt sich dabei sowohl ausschließlich mittels des Hilfsmagneten realisieren als auch in Kombination mit einem entsprechend ungleichmäßig ausgestalteten Luftspalt.

Eine weitere vorteilhafte Ausgestaltung der Erfindung ist dadurch gekennzeichnet, daß die Sensormittel zur Regelung der Winkelstellung des Rotors von dem magnetischen Feld des Rotors oder einer oder mehrerer Hilfsmagnete beaufschlagt werden.

Derartige Sensormittel sind beispielsweise mittels magnetoresistiver Sensoren realisierbar. Dadurch, daß das magnetische Feld des Rotors die Sensormittel beaufschlagt, müssen an dem Rotor selbst keine zusätzlichen Signalgeber angebracht werden.

Eine weitere vorteilhafte Ausgestaltung der Erfindung ist dadurch gekennzeichnet, daß die Genauigkeit, mit der die Winkelstellung des Rotors geregelt wird, ungleichmäßig über dem Verstellbereich des Stellgliedes ist.

Dadurch läßt sich die Vorrichtung individuell den Erfordernissen der jeweiligen Applikationen anpassen. Ist das Stellglied z.B. ein Ventilstößel in einer Flüssigkeitsoder Gasleitung, so ist insbesondere bei kleinen Verstellwegen des Ventilstößels, d.h. bei wenig geöffnetem Ventil, eine hochgenaue Einstellung der Linearposition des Ventilstößels wünschenswert, während bei weit geöffnetem Ventil, d.h. bei großen linearen Verstellwegen, eine geringere Einstellgenauigkeit des linearen Verstellweges des Ventilstößels geduldet werden kann. Dementsprechend ist die Regelgenauigkeit der Winkelstellung des Rotors dann in dem Anfangswinkelbereich größer als in dem Endwinkelbereich, und dementsprechend ist auch die Einstellgenauigkeit der Linearposition des Stellgliedes bei kleinen Verstellwegen größer als bei großen Verstellwegen.

Da der maximale Drehwinkel des Rotors kleiner als 180° ist, erscheint diese erfindungsgemäße Vorrichtung zunächst nicht für lineare Verstellantriebe geeignet zu sein. Durch die Verwendung einer Steilspindel läßt sich jedoch ein Verstellbereich von bis zu etwa 30 mm realisieren. Das für den Antrieb einer derartigen Steilspindel erforderliche sehr hohe Motormoment kann von der erfindungsgemäßen Vorrichtung aufgebracht werden. Durch den Einsatz einer Steilspindel verringert sich das erforderliche Rückstellmoment, um den Rotor bei Ausfall der Statorerregung in eine Vorzugswinkelstellung zu bewegen. Dadurch läßt sich der Rückstellmechanismus durch unsymmetrische Ausgestaltung des Luftspaltes und/oder der Hilfsmagnete realisieren. Die Winkelstellung des Rotors kann kontinuierlich eingestellt werden, und es lassen sich Einstellgenauigkeiten von weniger als 0,1 Winkelgraden realisieren. Damit weist die erfindungsgemäße Vorrichtung bei linearen Verstellwegen, die kleiner als 30 mm sind, gegenüber den bekannten Vorrichtungen mit Klauenpolschrittmotoren deutliche Vorteile auf.

Mittels der erfindungsgemäßen Vorrichtung lassen sich Durchschnittsgschwindigkeiten der Verstellung des Stellgliedes von einer Anfangs- in eine Endposition von mehr als 0,1 m/s erzielen. Derart hohe Durchschnittsgeschwindigkeiten der linearen Verstellung lassen sich mit der erfindungsgemäßen Vorrichtung aufgrund der guten dynamischen Eigenschaften der Vorrichtung einfach und kostengünstig realisieren. Mit Klauenpolschrittmotoren sind derart hohe Durchschnittsgeschwindigkeiten kaum zu realisieren.

Mittels der erfindungsgemäßen Vorrichtung können Kräfte von mehr als 15 N aufgebracht werden. Wenn derart hohe Maximalkräfte aufzubringen sind, kann die erfindungsgemäße Vorrichtung besonders vorteilhaft verwendet werden. Bei dieser erforderlichen Maximalkraft weist sie gegenüber Systemen mit Klauenpolschrittmotoren deutliche Vorteile hinsichtlich einfachem Aufbau und Kosten auf. Um mit Klauenpolschrittmotoren derartige Maximalkräfte zu erzielen, muß dieser von den Abmessungen her deutlich größer dimensioniert werden als die erfindungsgemäße Vorrichtung.

Die erfindungsgemäße Vorrichtung kann weiterhin dann vorteilhaft eingesetzt werden, wenn das Stellglied Umgebungstemperaturen von wenigstens 500°C ausgesetzt ist. Ist das Stellglied und damit auch die Gewindespindel derartigen Temperaturen ausgesetzt, so kommt es in der Regel zu einer Verlängerung der Gewindespindel infolge Wärmeausdehnung. Dadurch verschiebt sich der Zusammenhang zwischen der Winkelstellung des Rotors und der linearen Position des Stellgliedes, und es ist oftmals eine Kalibrierung des Zusammenhanges zwischen der Winkelstellung des Rotors und der linearen Position des Stellgliedes bei einer Referenzposition erforderlich. Ist eine solche Kalibrierung erforderlich, so kann die erfindungsgemäße Vorrichtung besonders vorteilhaft verwendet werden. Gegenüber einer Verwendung eines Klauenpolschrittmotors ergibt sich dann nämlich der zusätzliche Vorteil, daß infolge der erforderlichen Kalibrierung die Maximalbewegung des Rotors des Klauenpolschrittmotors auf 360° begrenzt ist. Damit kann die entsprechende Linearbewegung des Rotors des Klauenpolschrittmotors also maximal mit einer Genauigkeit eingestellt werden, die etwas geringer ist als die Anzahl der Schritte pro Umdrehung. Damit ergibt sich bei einer derartigen Applikation durch die Verwendung der erfindungsgemäßen Vorrichtung infolge des kontinuierlich einstellbaren Drehwinkels des Rotors eine deutlich höhere Genauigkeit im Vergleich mit einem Klauenpolschrittmotor.

Mittels der erfindungsgemäßen Vorrichtung lassen sich lineare Verstellgenauigkeiten des Stellgliedes von weniger als 10 μm erzielen.

Insbesondere bei einer derart hohen Verstellgenauigkeiten hat die erfindungsgemäße Vorrichtung deutliche Vorteile gegenüber einem Klauenpolschrittmotor. Mit der erfindungsgemäßen Vorrichtung läßt sich eine derartige Verstellgenauigkeit einfach und kostengünstig realisieren. Bei einem Klauenpolschrittmotor müßte man für eine derart hohe Verstellgenauigkeit einen Motor mit sehr großer Umfangslänge, d.h. mit sehr großem Durchmesser, verwenden. Dies würde zu einem überdimensionierten Motor führen, der zudem eine große Massenträgheit und damit eine schlechte Dynamik aufweist. Zudem wäre bei einer Klauenpolschrittmotorlösung eine relativ flache Steigung des Spindelgewindes erforderlich. Ist dann bei einer Applikation bei Ausfall des Statorstromes eine Rückstellung in eine bestimmte Vorzugsstellung gewünscht, so sind infolge des flachen Spindelgewindes sehr hohe Rückstellkräfte und damit aufwendige Konstruktionen zur Realisierung dieser Rückstellkräfte erforderlich.

Die erfindungsgemäße Vorrichtung kann vorteilhaft für die Betätigung eines Abgasrückführungsventils in einer Abgasrückführungsleitung eines Verbrennungsmotors verwendet werden.

Der lineare Verstellweg des Verstellgliedes ist bei dieser Anwendung in der Regel auf Werte kleiner als 30 mm begrenzt, die erforderliche Durchschnittsgeschwindigkeit zwischen der Schließstellung des Ventils und der Öffnungsstellung des Ventils muß oftmals wenigstens 0,1 m/s betragen. Für die Betätigung des Abgasrückführungsventils sind oft Maximalkräfte von wenigstens 15 N erforderlich. Zudem ist das Abgasrückführungsventil und damit die Gewindespindel im Betrieb einem heißen Gas von ca. 600°C bis 800°C ausgesetzt, und es wird oft eine hohe Verstellgenauigkeit gefordert.

Die erfindungsgemäße Vorrichtung kann vorteilhaft in einem Verbrennungsmotor bzw. in einem Kraftfahrzeug mit einem Verbrennungsmotor eingesetzt werden, insbesondere zur Betätigung eines Abgasrückführungsventils.

Einige Ausführungsbeispiele der Erfindung werden nachfolgend anhand der Zeichnung in den Fig. 1 bis 4 näher erläutert. Es zeigen:

Fig. 1 eine Schnittdarstellung einer Vorrichtung zum linearen Verstellen eines Ventilstößels in einer Gas- oder Flüssigkeitsleitung mit einem ein Innengewinde aufweisenden Rotor, einem einsträngigen Stator und einer in das Innengewinde des Rotors eingreifenden Gewindespindel, wobei sich der Ventilstößel in einer Schließstellung befindet,

Fig. 2 eine Schnittdarstellung eines ersten Ausführungsbeispiels der Vorrichtung längs der Linie II-II nach Fig. 1, wobei ein Rückstellmoment mittels zweier Hilfsmagnete erzeugt wird,

Fig. 3 eine Schnittdarstellung eines zweiten Ausführungsbeispiels der Vorrichtung längs der Linie II-II nach Fig. 1, wobei das Rückstellmoment mittels einer ungleichmäßigen Ausgestaltung des Luftspaltes realisiert wird.

Fig. 4 eine prinzipielle Darstellung einer vorteilhaften Verwendung der erfindungsgemäßen Vorrichtung zur Betätigung eines Abgasrückführungsventils in einer Abgasrückführungsleitung eines Verbrennungsmotors.

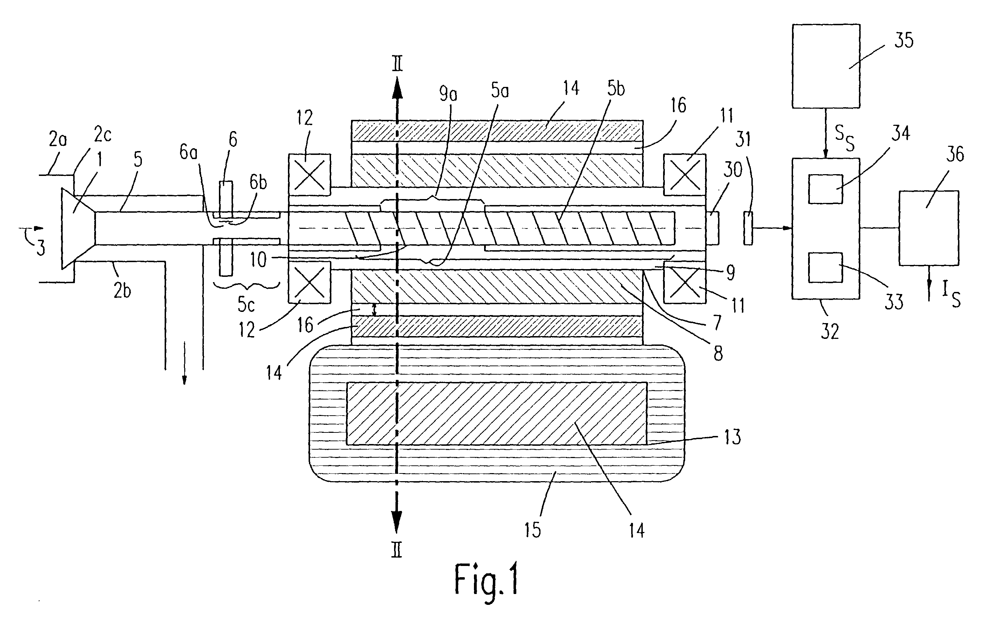

Fig. 1 zeigt im Schnitt eine Vorrichtung zum linearen Verstellen eines Ventilstößels 1, der in einer Gas- oder Flüssigkeitsleitung 2 angeordnet, wobei diese Schnittdarstellung sowohl für ein erstes als auch für ein zweites Ausführungsbeispiel gültig ist. Die Gas- oder Flüssigkeitsleitung 2 weist einen ersten Abschnitt 2a eines ersten Durchmessers und einen zweiten Abschnitt 2b eines zweiten Durchmessers auf, wobei der erste Durchmesser größer als der zweite Durchmesser ist. Das Gas bzw. die Flüssigkeit durchströmt die Gas- bzw. Flüssigkeitsleitung 2 in Richtung eines Pfeiles 3. Der Übergang 2c zwischen dem ersten Abschnitt 2a und dem zweiten Abschnitt 2b der Gas- bzw. Flüssigkeitsleitung 2 kann durch lineares Bewegen des Ventilstößels 1 entgegen der Richtung des Pfeiles 3 bzw. in der Richtung des Pfeiles 3 geöffnet bzw. geschlossen werden. In der in Fig. 1 gezeigten Darstellung befindet sich der Ventilstößel 1 in der Schließstellung.

Der Ventilstößel 1 ist an einer Gewindespindel 5 befestigt, welche in einem Abschnitt 5a ein Außengewinde 5b aufweist. Die Gewindespindel 5 ist in einem Sicherungsabschnitt 5c quadratisch ausgebildet. Es ist ein Sicherungselement 6 vorgesehen, welches eine quadratisch ausgebildete Öffnung 6a aufweist, die den quadratisch ausgebildeten Sicherungsabschnitt 5c der Gewindespindel 5 in einem Bereich 6b formschließend umfaßt. Das Sicherungselement 6 ist auf nicht näher dargestellte Weise an einem nicht dargestellten Gehäuse der Vorrichtung befestigt. Durch das Zusammenspiel von dem Sicherungsabschnitt 5c der Gewindespindel 5 und dem Sicherungselement 6 ist die Gewindespindel 5 gegen eine Verdrehung gesichert. Es sind auch andere Formen des Sicherungsabschnittes 5c denkbar. Es ist ein als magnetisierter Drehkörper ausgebildeter Rotor 7 vorgesehen, der aus einem äußeren, zylindrisch ausgebildeten Permanentmagneten 8 und einem inneren zylindrisch ausgebildeten Kunststoffkörper 9 besteht. In den Kunststoffkörper 9 ist in einem Abschnitt 9a ein Innengewinde 10 eingepaßt. In dieses Innengewinde 10 greift das Außengewinde 5b der Gewindespindel 5 ein. Der Rotor 7 ist mittels eines ersten Lagers 11 und mittels eines zweiten Lagers 12 in dem nicht dargestellten Gehäuse der Vorrichtung gelagert. Es ist ein Stator 13 vorgesehen, der ein Eisenteil 14 aufweist, in das eine Statorwicklung 15 eingelegt ist. Das Eisenteil 14 kann auch aus anderen hochpermeablen Werkstoffen, wie z.B. Stahl, Sintereisen oder geschichtetem Elektroblech, bestehen. Das Eisenteil 14 und der zylindrisch ausgebildete Permanentmagnet 8 sind durch einen Luftspalt 16 voneinander getrennt.

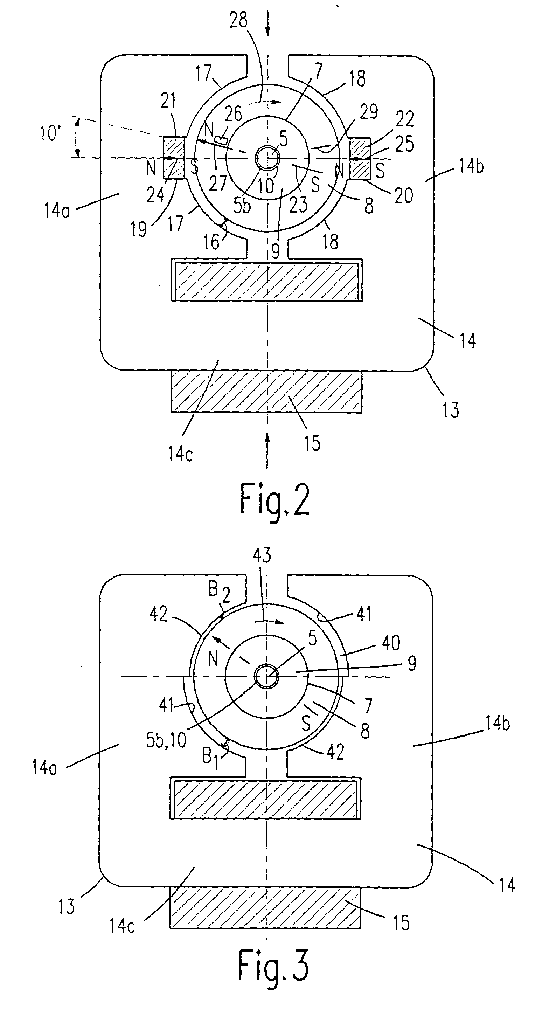

Die Funktionsweise und der detailliertere Aufbau von Stator 13 und Rotor 7 werden nachfolgend anhand der Fig. 2 erläutert, die das erste Ausführungsbeispiel im Schnitt entlang der Linie II-II aus Fig. 1 darstellt. Das Eisenteil 14 ist U-förmig ausgebildet und weist einen ersten Schenkel 14a und einen zweiten Schenkel 14b auf, die mittels eines Joches 14c miteinander verbunden sind. Um das Joch 14c ist zwischen den Schenkeln 14a und 14b die Statorwicklung 15 gewickelt. Der erste Schenkel 14a und der zweite Schenkel 14b sind als Polschuhe mit den Luftspalt 16 außen begrenzenden Polbögen 17 bzw. 18 ausgebildet. Die Polbögen 17 bzw. 18 sind in ihrer Mitte durch eine erste Nut 19 bzw. eine zweite Nut 20 unterbrochen. In die erste Nut 19 ist ein erster Hilfsmagnet 21 und in die zweite Nut 20 ist ein zweiter Hilfsmagnet 22 eingebettet. Der zylindrisch ausgebildete Permanentmagnet 8 ist in Richtung des Pfeiles 23 zweipolig magnetisiert ausgebildet und weist dementsprechend einen Nordpol N und einen Südpol S auf. Der erste Hilfsmagnet 21 ist zweipolig magnetisiert in Richtung eines Pfeiles 24, und der zweite Hilfsmagnet 22 ist in Richtung eines Pfeiles 25 magnetisiert. Der Luftspalt 16 hat im Bereich der Polbögen 17 und 18 eine konstante Breite.

Der erste Hilfsmagnet 21 und der zweite Hilfsmagnet 22 bilden einen Rückstellmechanismus für den zylindrisch ausgebildeten Permanentmagneten 8 und erzeugen einen Magnetfluß solcher Stärke und Richtung, daß der zylindrisch ausgebildete Permanentmagnet 8 bei nicht erregter Statorwicklung 15 bestrebt ist, sich in Richtung des Magnetflusses des ersten Hilfsmagneten 21 und des zweiten Hilfsmagneten 22 auszurichten. Es ist jedoch ein Anschlagbolzen 26 an dem Rotor 7 befestigt, der bei nicht erregter Statorwicklung 16 infolge des durch den ersten und den zweiten Hilfsmagneten 21 bzw. 22 gebildeten Rückstellmechanismus gegen eine an dem Stator 13 angeordnete Anschlagkante 27 läuft. Diese Winkelstellung des Rotors 7, die der in der Fig. 2 gezeigten Winkelstellung des Rotors 7 entspricht, wird als Schließwinkelstellung bezeichnet. Die Anschlagkante 27 ist um 10° gegenüber den Magnetisierungsrichtungen des ersten Hilfsmagneten 21 und des zweiten Hilfsmagneten 22 geneigt. Wird die Statorwicklung 15 nun mit einem Statorstrom gespeist, so verstellt sich der Rotor 7 entgegen den von dem ersten Hilfsmagneten 21 und dem zweiten Hilfsmagneten 22 ausgeübten Rückstellkräften im Uhrzeigersinn in einer Öffnungsrichtung 28. Das gegen dieses Verstellen in der Öffnungsrichtung 28 wirkende Rückstellmoment des ersten Hilfsmagneten 21 und des zweiten Hilfsmagneten 22 ist ständig bestrebt, den Rotor 7 in die Schließwinkelstellung zurückzubewegen. Es bildet sich damit auch ohne eine mechanische Rückzugsfeder ein Bewegungsmechanismus aus, der eine Rückstellwirkung ausübt. Damit wird die Vorrichtung mechanisch und elektrisch sehr einfach. Es ist jedoch auch denkbar, den Rückstellmechanismus mittels mechanischer Federn zu realisieren. Mittels geeigneter Einstellung des Statorstromes kann der Rotor ausgehend von der in der Fig. 2 dargestellten Schließwinkelstellung um ca. 160° in der Öffnungsrichtung 28 in eine nicht dargestellte Öffnungswinkelstellung bewegt werden. In der Öffnungswinkelstellung läuft der Anschlagbolzen 26 des Rotors 7 gegen eine zweite Anschlagkante 29, die um 160° in der Öffnungsrichtung 28 gegenüber der ersten Anschlagkante 27 versetzt angeordnet ist. Würde man die erste Anschlagkante 27 nicht vorsehen, so würde sich der Rotor 7 bei Ausfall der Erregung des Stators 13 in eine Winkelstellung 0° begeben, die der Magnetisierungsrichtung des ersten Hilfsmagneten 21 und des zweiten Hilfsmagneten 22 entspricht. Die Vorrichtung erzeugt ein Drehmoment, das ausgehend von dieser Winkelstellung 0° bis zu einer Winkelstellung 180°, in der der Rotor 7 um 180° gegenüber der Winkelstellung 0° verdreht ist, sinusförmig verläuft. In der Winkelstellung 0° und der Winkelstellung 180° wäre das Drehmoment daher auch bei erregter Statorwicklung 15 annähernd gleich Null, und ein sicheres und störungsfreies Verdrehen des Rotors 7 könnte nicht gewährleistet werden. Daher wird die Schließwinkelstellung des Rotors 7 mittels der ersten Anschlagkante 27 um ca. 10° und die Öffnungswinkelstellung mittels der zweiten Anschlagkante 29 um 170° gegenüber der Winkelstellung 0° versetzt. Es ist auch möglich, die erste Anschlagkante 27 und die zweite Anschlagkante 29 unsymmetrisch zu den Winkelstellungen 0° und 180° anzuordnen. In der Schließwinkelstellung wirkt auf den Rotor 7 bei erregter Statorwicklung 15 ein deutlich von Null verschiedenes Drehmoment ein, und der Rotor 7 wird bei Erregung des Stators 13 in der Öffnungsrichtung 28 bewegt. Mittels einer geeigneten Einstellung des Stromes in der Statorwicklung 15 kann der Rotor 7 ausgehend von der Schließwinkelstellung kontinierlich in die Öffnungswinkelstellung bewegt werden. Die erste und die zweite Anschlagkante 27 bzw. 29 gewährleisten somit einen störungsfreien und funktionssicheren Betrieb der Vorrichtung.

Das Umsetzen der Rotationsbewegung des Rotors 7 in die Linearbewegung der Gewindespindel 5 wird nachfolgend anhand der Fig. 1 erläutert. Die Drehbewegung des Rotors 7 in der Öffnungsrichtung 28 wird mittels des Außengewindes 5b, das in das Innengewinde 10 des Rotors 7 eingreift, in eine Linearbewegung entgegen der Richtung des Pfeiles 3 umgesetzt. Dadurch wird auch der Ventilstößel 1 entgegen der Richtung des Pfeiles 3 bewegt, und der Übergang 2c zwischen dem ersten Leitungsabschnitt 2a und dem zweiten Leitungsabschnitt 2b der Gas- bzw. Flüssigkeitsleitung 2 wird geöffnet. Das lineare Verstellen des Ventilstößels 1 erfolgt dabei hochgenau und kontinuierlich und nicht in einzelnen, diskreten Schritten, wie beispielsweise bei einem Klauenpolschrittmotor. Um die Einstellgenauigkeit der linearen Position des Ventilstößels 1 zu erhöhen, ist an dem Rotor 7 ein Winkelgeber 30 angeordnet, der die aktuelle Winkelstellung des Rotors 7 an einen Winkelempfänger 31 übermittelt. Der Winkelgeber 30 kann z.B. als Dauermagnet und der Winkelempfänger 31 als magnetoresistiver Sensor realisiert werden. Es ist jedoch auch möglich, auf den Winkelgeber 30 zu verzichten und den magnetoresistiven Sensor direkt mit dem Stirnmagnetfeld des Permanentmagneten 8 zu beaufschlagen. Ferner ist es möglich, daß der Winkelempfänger 31 als Potentiometer oder als Hallsensor realisiert wird. Der Winkelempfänger 31 leitet die aktuelle Winkelstellung des Rotors 7 bzw. ein die aktuelle Winkelstellung des Rotors 7 charakterisierendes Signal an einen Mikrocontroller 32 weiter. Dieser Mikrocontroller 32 weist Regelmittel 33 und Kalibriermittel 34 auf. Der Mikrocontroller 32 ist ferner mit einer Steuereinheit 35 und einer Stromspeiseschaltung 36 gekoppelt. Die Stromspeiseschaltung 36 speist die Statorwicklung 15 des Stators 13 mit einem Statorstrom $I_S$. Die Steuereinheit 35 übermittelt dem Mikrocontroller 32 eine Steuerinformation $S_S$, die angibt, welche lineare Position der Ventilstößel 1 einnehmen soll. Entsprechend der Steuerinformation $S_S$ wird nun mittels des Mikrocontrollers 32 ein bestimmter Statorstrom $I_S$ eingestellt. Infolge dieses Statorstromes $I_S$ nimmt der Rotor 7 nun eine bestimmte Winkelstellung ein und dementsprechend der Ventilstößel 1 eine bestimmte Linearposition. Die aktuelle Winkelstellung des Rotors 7 wird mittels des Winkelgebers 30 und des Winkelempfängers 31 an den Mikrocontroller übermittelt, welcher mittels der Regelmittel 33 den Statorstrom $I_S$, falls erforderlich, nachregelt. Anstelle des Winkelgebers 30 und des Winkelempfängers 31 lassen sich auch Linearpositionsgeber und Linearpositionsempfänger verwenden, die die Linearposition der Gewindespindel (5) detektieren. Mittels dieser Regelung läßt sich eine Winkelgenauigkeit der Winkelstellung des Rotors 7 von weniger als 0,1° realisieren.

Der Ventilstößel 1 und ein großer Teil der Gewindespindel 5 befinden sich innerhalb der Gas- bzw. Flüssigkeitsleitung 2. Wird diese Gas- bzw. Flüssigkeitsleitung 2 von einem heißen Gas oder einer heißen Flüssigkeit durchströmt, so dehnt sich die Gewindespindel 5 infolge Wärmedehnung aus. Dadurch verschiebt sich der Zusammenhang zwischen der aktuellen Winkelstellung des Rotors 7 und der aktuellen Linearposition des Ventilstößels 1. Um diesen Zusammenhang bei sich ausdehnender Gewindespindel 5 zu aktualisieren, sind die Kalibriermittel 34 des Mikrocontrollers 32 vorgesehen. Befindet sich der Ventilstößel 1 in der in der Fig. 1 dargestellten Schließstellung, so ist die lineare Position des Ventilstößels 1 eindeutig definiert. Dann wird dem Mikrocontroller 32 ein Kalibriersignal übermittelt, welches dem Mikrocontroller 32 signalisiert, daß sich der Ventilstößel 1 in der Schließstellung befindet. Mittels der Kalibriermittel 34 wird dann der aktuelle Zusammenhang zwischen der Winkelstellung des Rotors 7 und der linearen Position des Ventilstößels 1 kalibriert. Dadurch wird die lineare Verstellgenauigkeit des Ventilstößels 1 bei sich ausdehnender Gewindespindel deutlich erhöht.

Fig. 3 zeigt eine Schnittdarstellung der zweiten Ausführungsform der Erfindung entlang der Linie II-II der Fig. 1. Soweit die zweite Ausführungsform der Erfindung mit der ersten Ausführungsform der Erfindung übereinstimmt, sind gleiche Bezugsziffern verwendet. Es ist ein zylindrisch ausgebildeter Rotor 7 vorgesehen, der aus einem äußeren zylindrisch ausgebildeten Permanentmagneten 8 und einem inneren zylindrisch ausgebildeten Kunststoffkörper 9 besteht. In den Kunststoffkörper 9 ist ein Innengewinde 10 eingepaßt, in das ein Außengewinde 5b einer Gewindespindel 5 eingreift. Es ist ein Stator 13 vorgesehen, der ein Eisenteil 14 aufweist, in das eine Statorwicklung 15 eingelegt ist. Das Eisenteil 14 kann auch aus anderen hochpermeablen Werkstoffen, wie z.B. Stahl, Sintereisen oder geschichtetem Elektroblech, bestehen. Das Eisenteil 14 ist U-förmig ausgebildet und weist einen ersten Schenkel 14a und einen zweiten Schenkel 14b auf. die mittels eines Joches 14c miteinander verbunden sind. Um das Joch 14c ist zwischen den Schenkeln 14a und 14b die Statorwicklung 15 gewickelt. Das Eisenteil 14 und der zylindrisch ausgebildete Permanentmagnet 8 sind durch einen Luftspalt 40 voneinander getrennt. Das Eisenteil 14 weist zwei sich diametral gegenüberliegende Teilpolbögen 41 und zwei sich diametral gegenüberliegende Teilpolbögen 42 auf. Im Bereich der Teilpolbögen 41 weist der Luftspalt 40 eine erste Breite $B_1$ auf, und im Bereich der Teilpolbögen 42 weist der Luftspalt 40 eine zweite Breite $B_2$ auf, wobei die erste Breite $B_1$ größer ist als die zweite Breite $B_2$. Der zylindrisch ausgebildete Permanentmagnet 8 ist zweipolig magnetisiert und hat damit einen Nordpol N und einen Südpol S. Bei nicht erregter Statorwicklung 15 stellt sich der Rotor 7 entsprechend seiner Magnetisierung in die Position ein, die der Position des geringstens magnetischen Widerstandes entspricht. Diese Position ist in der Fig. 3 dargestellt. Wird die Statorwicklung 15 erregt, dann verstellt sich der Rotor 7 entgegen den magnetischen Rückstellkräften in einer Öffnungsrichtung 43. Das gegen dieses Verstellen in der Öffnungsrichtung 43 wirkende Klebemoment aufgrund der ungleichmäßigen Gestaltung des Luftspaltes 40 ist ständig bestrebt, den Rotor 7 entgegen der Öffnungsrichtung 43 zurückzubewegen. Es bildet sich damit auch ohne mechanische Rückzugsfeder ein Bewegungsmechanismus aus, der auf mechanisch und elektrisch sehr einfache Weise eine Rückstellwirkung ausübt. Die Funktionssicherheit der Verstellung des Rotors 7 kann mittels nicht dargestellter Anschlagbolzen und Anschlagkanten, die den Verstellbereich auf 160° begrenzen, entsprechend dem ersten Ausführungsbeispiel erhöht werden.

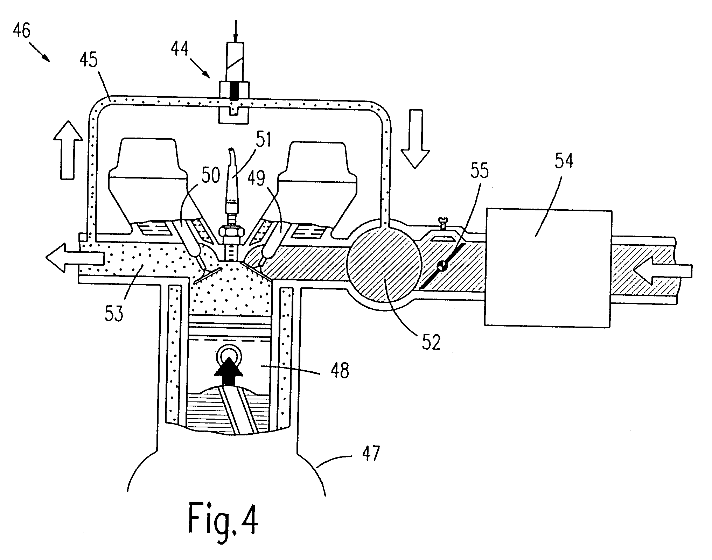

Fig. 4 zeigt eine prinzipielle Darstellung der Verwendung der erfindungsgemäßen Vorrichtung zur Betätigung eines Abgasrückführungsventils 44 in einer Abgasrückführungsleitung 45 eines Verbrennungsmotors 46. Es ist ein Zylinder 47 des Verbrennungsmotors 46 dargestellt, in dem ein Kolben 48 bewegbar angeordnet ist. Der Zylinder 47 weist ein Einlaßventil 49, ein Auslaßventil 50 sowie eine Zündvorrichtung 51 auf. Es ist eine Einlaßventilleitung 52 und eine Auslaßventilleitung 53 vorgesehen. Die Einlaßventilleitung 52 und die Auslaßventilleitung 53 sind mittels der Abgasrückführungsleitung 45 miteinander verbunden. In der Abgasrückführungsleitung 45 befindet sich das Abgasrückführungsventil 44, mittels der die Abgasrückführungsleitung 45 geöffnet oder geschlossen werden kann. Der Einlaßventilleitung 52 wird mittels einer Mischeinheit 54 und einer Drosselklappe 55 ein Kraftstoff-Luft-Gemisch zugeführt. Das Kraftstoff-Luft-Gemisch strömt bei geöffnetem Einlaßventil 49 in den Zylinder 47 ein, wird mittels des Kolbens 48 verdichtet, vor dem oberen Totpunkt des Kolbenhubes gezündet und unter Leistungsabgabe entspannt. Danach wird das Kraftstoff-Luft-Gemisch mittels des geöffneten Auslaßventils mittels des Kolbens 48 in die Auslaßventilleitung gedrückt. Ein Teil dieses Abgases in der Auslaßventilleitung kann mittels der Abgasrückführungsleitung 45 bei geöffnetem Abgasrückführungsventil 44 in die Einlaßventilleitung 52 zurückgeleitet und erneut verbrannt werden. Der Verbrennungsmotor 46 kann auch als Dieselmotor ausgeführt sein. Eine derartige Abgasrückführung verringert die Schadstoffemission des Verbrennungsmotors, erhöht den Wirkungsgrad und verringert den Kraftstoffverbrauch. Der nicht näher dargestellte Ventilstößel des Abgasrückführungsventils 44 wird von der erfindungsgemäßen Vorrichtung betätigt. Das heiße Gas in der Abgasrückführungsleitung 45 hat im Betrieb eine Temperatur zwischen 600°C und 800°C. Für die Betätigung des Abgasrückführungsventils 44 sind oft Maximalkräfte von wenigstens 15 N und Schließzeiten von weniger als 200 msec erforderlich. Diese Anforderungen werden von der erfindungsgemäßen Vorrichtung erfüllt.

**Patentansprüche**

1. Vorrichtung zum linearen Verstellen eines Stellgliedes (1). insbesondere eines Ventilstößels (1) in einer Gas- oder Flüssigkeitsleitung (2), wobei die Vorrichtung einen Rotor (7) mit einem Innengewinde (10) aufweist, dessen Drehbewegung in eine Linearbewegung einer gegen Verdrehen gesicherten und in das Innengewinde (10) eingreifbaren Gewindespindel (5) umsetzbar ist, **dadurch gekennzeichnet, daß** der Rotor (7) einen magnetisierten Drehkörper (8) aufweist, der mit einem einsträngigen, elektrisch erregbarem Stator (13) zusammenwirkt, wobei die Winkelstellung des Rotors (7) mittels des Statorstromes einstellbar ist und wobei der maximale Drehwinkelbereich des Rotors (7) kleiner als 180° ist.

2. Vorrichtung nach Anspruch 1, **dadurch gekennzeichnet,**
**daß** Sensormittel (31) vorgesehen sind, die in Abhängigkeit der Winkelstellung des Rotors (7) oder der Linearposition der Gewindespindel (5) Sensorsignale erzeugen und daß Regelmittel (33) vorgesehen sind, die in Abhängigkeit der Sensorsignale die Winkelstellung des Rotors (7) regeln.

3. Vorrichtung nach Anspruch 1, **dadurch gekennzeichnet,**
**daß** Meßmittel vorgesehen sind, mittels derer der Strom und die Spannung des Stators (13) meßbar ist, daß die Meßmittel in Abhängigkeit der Winkelstellung des Rotors (7) Meßsignale erzeugen und daß Regelmittel vorgesehen sind, die in Abhängigkeit der Meßsignale die Winkelstellung des Rotors (7) regeln.

4. Vorrichtung nach einem der Ansprüche 1 bis 3, **dadurch gekennzeichnet,**
**daß** das Innengewinde (10) des Rotors (7) und das Gewinde der Gewindespindel (5) als Steilgewinde mit einem Steigungswinkel von wenigstens 30° ausgebildet sind.

5. Vorrichtung nach einem der Ansprüche 1 bis 4, **dadurch gekennzeichnet,**
**daß** Kalibriermittel (34) vorgesehen sind, mittels derer bei einer Referenzposition des Stellgliedes (1) der Zusammenhang zwischen der Winkelstellung des Rotors (7) und der linearen Position des Stellgliedes (1) kalibriert wird.

6. Vorrichtung nach Anspruch 5, **dadurch gekennzeichnet,**
**daß** das Stellglied ein Ventilstößel (1) eines Ventils ist und die Referenzposition der Schließstellung des Ventils entspricht.

7. Vorrichtung nach einem der Ansprüche 1 bis 6, **dadurch gekennzeichnet,**
**daß** der Spalt (16) zwischen Stator (13) und Rotor (7) derart ungleichmäßig ausgebildet ist, daß der Rotor (7) bei unerregtem Stator (13) eine Vorzugswinkelstellung einnimmt.

8. Vorrichtung nach einem der Ansprüche 1 bis 7, **dadurch gekennzeichnet,**
**daß** wenigstens ein Hilfsmagnet (21, 22) vorgesehen ist, der den Rotor (7) bei unerregtem Stator (13) in die Vorzugswinkelstellung bewegt.

9. Vorrichtung nach einem der Ansprüche 2 bis 8, **dadurch gekennzeichnet,**
**daß** die Sensormittel (31) zur Regelung der Winkelstellung des Rotors (7) von dem magnetischen Feld des Rotors (7) oder einer oder mehrerer Sensoren (30) beaufschlagt werden.

10. Vorrichtung nach einem der Ansprüche 2 bis 8, **dadurch gekennzeichnet,**
**daß** die Genauigkeit, mit der die Winkelstellung des Rotors (7) geregelt wird, ungleichmäßig über dem Verstellbereich des Stellgliedes (1) ist.

11. Verwendung einer Vorrichtung nach einem der Ansprüche 1 bis 10 zur Betätigung eines Ventils in einer Gas- oder Flüssigkeitsleitung (45) eines Verbrennungsmotors (46), wobei das Gas bzw. die Flüssigkeit im Betrieb Temperaturen von mehr als 400°C aufweist.

12. Verwendung einer Vorrichtung nach einem der Ansprüche 1 bis 10 für die Betätigung eines Abgasrückführungsventils (44) in einer Abgasrückführungsleitung (45) eines Verbrennungsmotors (46).

13. Verbrennungsmotor (46) mit einer Abgasrückführungsleitung (45), in der ein Abgasrückführungsventil (44) angeordnet ist, das von einer Vorrichtung nach einem der Ansprüche 1 bis 10 betätigbar ist.

14. Kraftfahrzeug mit einem Verbrennungsmotor (46) und mit einer Abgasrückführungsleitung (45), in der ein Abgasrückführungsventil (44) angeordnet ist, das von einer Vorrichtung nach einem der Ansprüche 1 bis 10 betätigbar ist.

**Claims**

1. A device for the linear actuation of a control member (1), particularly a valve tappet (1) in a gas or liquid conduit (2), the device comprising a rotor (7) having an inner screwthread (10) whose rotary movement is convertible into a linear movement of a threaded spindle (5) which is locked against rotation and which is engageable with the inner screwthread (10), **characterized in that** the rotor (7) comprises a magnetized rotary body (8) which cooperates with a single-strand electrically energizable stator (13), the angular position of the rotor (7) being adjustable by means of the stator current and the maximum angular rotation of the rotor (7) being smaller than 180°.

2. A device as claimed in Claim 1, **characterized in that** sensor means (31) have been provided to generate sensor signals in dependence on the angular position of the rotor (7) or the linear position of the threaded spindle (5), and control means (33) have been provided to control the angular position of the rotor (7) in dependence on the sensor signals.

3. A device as claimed in Claim 1, **characterized in that** measurement means have been provided to measure the current and the voltage of the stator (13), the measurement means generate measurement signals in dependence on the angular position of the rotor (7), and control means (33) have been provided to control the angular position of the rotor (7) in dependence on the measurement signals.

4. A device as claimed in any one of the Claims 1 to 3, **characterized in that** the inner screwthread (10) of the rotor (7) and the screwthread of the threaded spindle (5) are coarse-pitch screwthreads having a pitch angle of at least 30°

5. A device as claimed in any one of the Claims 1 to 4, **characterized in that** calibration means (34) have been provided to calibrate the relationship between the angular position of the rotor (7) and the linear position of the control member (1) in a reference position of the control member (1).

6. A device as claimed in Claim 5, **characterized in that** the control member is a valve tappet (1) of a valve and the reference position corresponds to the shut-off position of the valve.

7. A device as claimed in any one of the Claims 1 to 6, **characterized in that** the gap (16) between the stator (13) and the rotor (7) is given such a non-uniform shape that the rotor (7) assumes a preferred angular position when the stator (13) is not energized.

8. A device as claimed in any one of the Claims 1 to 7, **characterized in that** at least one auxiliary magnet (21, 22) has been provided, which magnet moves the rotor (7) into the preferred angular position when the stator (13) is not energized.

9. A device as claimed in any one of the Claims 2 to 8, **characterized in that** the sensor means (31) for controlling the angular position of the rotor (7) are driven by the magnetic field of the rotor (7) or by one or more sensors (30).

10. A device as claimed in any one of the Claims 2 to 8, **characterized in that** the accuracy with which the angular position of the rotor (7) is controlled varies non-uniformly over the actuation range of the control member (1).

11. The use of a device as claimed in any one of the Claims 1 to 10 for actuating a valve in a gas or liquid conduit (45) of an internal combustion engine (46), the gas or the liquid having temperatures of more than 400 °C during operation.

12. The use of a device as claimed in any one of the Claims 1 to 10 for actuating an exhaust gas recirculation valve (44) in an exhaust gas recirculation conduit (45) of an internal combustion engine (46).

13. An internal combustion engine (46) having an exhaust gas recirculation conduit (45) in which an exhaust gas recirculation valve (44) is arranged, which valve can be actuated by a device as claimed in any one of the Claims 1 to 10.

14. A motor vehicle having an internal combustion engine (46) and having an exhaust gas recirculation conduit (45) in which an exhaust gas recirculation valve (44) is arranged, which valve can be actuated by a device as claimed in any one of the Claims 1 to 10.

**Revendications**

1. Dispositif de déplacement linéaire d'un vérin (1), en particulier d'un poussoir de soupape (1), dans une conduite de gaz ou de liquide (2), le dispositif présentant un rotor (7) avec un filet interne (10) dont le mouvement de rotation peut être transformé en un mouvement linéaire d'une broche filetée (5) qui est bloqué contre la rotation et entre en prise dans le filet interne (10), **caractérisé en ce**

**que** le rotor (7) présente un corps rotatif (8) magnétisé qui collabore avec un stator (13) à une seule branche excitable électriquement, la position angulaire du rotor (7) pouvant être réglée à l'aide du courant de stator et la plage maximale d'angle de rotation du rotor (7) étant inférieure à 180°.

2. Dispositif selon la revendication 1, **caractérisé en ce**

**qu'**il est prévu des moyens de capteur (31) qui produisent des signaux de capteur en fonction de la position angulaire du rotor (7) ou de la position linéaire de la broche filetée (5) et que des moyens de réglage (33) qui règlent la position angulaire du rotor (7) en fonction des signaux de capteur sont également prévus.

3. Dispositif selon la revendication 1, **caractérisé en ce**

**qu'**il est prévu des moyens de mesure à l'aide desquels le courant et la tension du stator (13) peuvent être mesurés, que les moyens de mesure produisent des signaux de mesure en fonction de la position angulaire du rotor (7) et qu'il est prévu des moyens de réglage qui règlent la position angulaire du rotor (7) en fonction des signaux de mesure.

4. Dispositif selon l'une des revendications 1 à 3, **caractérisé en ce**

**que** le filet interne (10) du rotor (7) et le filet de la broche filetée (5) sont conçus comme des filets en pente avec un angle d'inclinaison d'au moins 30°.

5. Dispositif selon l'une des revendications 1 à 4, **caractérisé en ce**

**qu'**il est prévu des moyens de calibrage (34) à l'aide desquels le rapport entre le position angulaire du rotor (7) et la position linéaire du vérin (1) est calibré pour une position de référence du vérin (1).

6. Dispositif selon la revendication 5, **caractérisé en ce**

**que** le vérin est un poussoir de soupape (1) d'une soupape et que la position de référence correspond à la position de fermeture de la soupape.

7. Dispositif selon l'une des revendications 1 à 6, **caractérisé en ce**

**que** l'entrefer (6) entre le stator (13) et le rotor (7) est de conception irrégulière de telle sorte que le rotor (7) adopte une position angulaire préférée lorsque le stator 13 n'est pas excité.

8. Dispositif selon l'une des revendications 1 à 7, **caractérisé en ce**

**qu'**il est prévu au moins un aimant auxiliaire (21, 22) qui déplace le rotor (7) dans la position angulaire préférée lorsque le stator (13) n'est pas excité.

9. Dispositif selon l'une des revendications 2 à 8, **caractérisé en ce**

**que** les moyens de capteur (31) sont alimentés en vue du réglage de la position angulaire du rotor (7) par le champ magnétique du rotor (7) ou d'un ou plusieurs capteurs (30).

10. Dispositif selon l'une des revendications 2 à 8, **caractérisé en ce**

**que** la précision avec laquelle la position angulaire du rotor (7) est réglée est irrégulière sur la course de déplacement du vérin (1).

11. Mise en oeuvre d'un dispositif selon l'une des revendications 1 à 10 en vue de l'actionnement d'une soupape dans une conduite de gaz ou de liquide (45) d'un moteur à combustion (46), le gaz ou le liquide présentant en service des températures de plus de 400°C.

12. Mise en oeuvre d'un dispositif selon l'une des revendications 1 à 10 pour l'actionnement d'une soupape de réinjection des gaz d'échappement 44) dans une conduite de réinjection des gaz d'échappement (45) d'un moteur à combustion (46).

13. Moteur à combustion (46) avec une conduite de réinjection des gaz d'échappement (45), dans lequel est disposé une soupape de réinjection des gaz d'échappement (44) qui peut être actionnée par un dispositif selon l'une ou plusieurs des revendications 1 à 10.

14. Véhicule automobile avec un moteur à combustion (46) et avec une conduite de réinjection des gaz d'échappement (45), dans lequel est disposé une soupape de réinjection des gaz d'échappement (44) qui peut être actionnée par un dispositif selon l'une des revendications 1 à 10.

Fig.1

EP 0 818 871 B1

Fig.2

Fig.3

Fig.4